# DEMANDE DE BREVET EUROPEEN

(11) **EP 0 629 485 A2**
(43) Date de publication de la demande: **21.12.1994**
(21) Numéro de dépôt: 94201601.5
(22) Date de dépôt: 06.06.1994
(51) Int. Cl.: B29C 51/16, B29C 51/08, B29C 51/20

(54) **Procédé et moule de thermoformage pour mouler un article présentant au moins une zone fortement déformée**

(30) Priorité: 16.06.1993 IT GE930056
(71) Demandeur: SOLVAY (Société Anonyme), B-1050 Bruxelles (BE)
(72) Inventeur: Quarello, Bruno, I-10134 Torino (IT)
(74) Mandataire: Meyers, Liliane

(57) **Abrégé**

Le procédé comporte les étapes successives suivantes :
a) introduction du revêtement (11) tendu entre les matrices mâle (4) et femelle (1) d'un moule de thermoformage sous pression ouvert dont les empreintes (2), (5) reproduisent la forme de l'article à produire;
b) préformage du revêtement (11) au moins dans les zones (3) fortement déformées par application forcée contre au moins une partie d'une des empreintes (2) et maintien de ce revêtement contre celle-ci;
c) introduction de la feuille support (13) préchauffée entre les empreintes (2), (5) du moule ouvert;
d) fermeture du moule pour assurer l'association entre la feuille support (13) et le revêtement décoratif (11) préformé et le moulage définitif de l'article à produire.

Le procédé et le moule conviennent particulièrement pour la réalisation de garnitures internes de portières de véhicules automobiles comportant notamment des accoudoirs.

## Description

La présente invention concerne un procédé et un moule de thermoformage convenant particulièrement pour mouler un article, tel que, par exemple, un élément de garniture interne pour une portière de véhicule automobile présentant au moins une zone fortement déformée et obtenu par association, par thermoformage sous pression, d'une feuille support rigide thermo-déformable et d'un revêtement décoratif souple.

Il est bien connu, notamment par les brevets Etats-Unis 4.243.456 et 4.328.067, de réaliser des pièces de garnitures, telles que des pièces de garniture interne de portières de véhicules automobiles, qui sont constituées d'un support rigide conformé tel qu'un support métallique ou en matière thermoplastique éventuellement chargée, qui est revêtu d'un élément décoratif souple tel qu'un textile ou un cuir artificiel. En général et pour des raisons économiques, l'association, par collage ou par soudage entre le support et le revêtement est effectuée simultanément avec la mise en forme du support par emboutissage ou par thermoformage.

Selon la technique généralement utilisée, la feuille support plane éventuellement préchauffée et/ou préencollée et l'élément décoratif souple maintenu marginalement par un cadre sont introduits entre les matrices d'un moule et formés et assemblés simultanément par la fermeture du moule.

Dans le cas de la production, selon cette technique, de pièces telles que, par exemples, des pièces de garniture interne de portières de véhicules automobiles, la feuille support plane doit, dans certaines zones, être fortement déformée, par exemple pour constituer un accoudoir, et, de ce fait, lors du formage, les zones correpondantes du revêtement décoratif sont soumises à des étirements et/ou à des allongements importants qui peuvent conduire à un certain écrasement du revêtement décoratif et, dès lors, à un produit fini inesthétique ou moins confortable. En particulier, lorsqu'on met en oeuvre pour de tels produits des revêtement décoratifs rembourrés, tels que des simili-cuirs doublés d'une mousse thermoplastique ou des velours à poils épais, on constate que ce type de revêtement perd son toucher doux aux endroits fortement déformés dans de tels produits finis.

La présente invention a, dès lors, pour objet de fournir un procédé et un moule approprié qui permettent de réduire notablement ce type d'inconvénient.

L'invention concerne, dès lors, à titre principal, un procédé pour mouler un article présentant au moins une zone fortement déformée et constitué d'une feuille support rigide thermodéformée et d'un revêtement décoratif souple associés qui se caractérise en ce qu'il comprend les étapes successives suivantes :
a) introduction du revêtement tendu entre les matrices mâle et femelle d'un moule de thermoformage sous pression ouvert dont les empreintes reproduisent la forme de l'article à produire;
b) préformage du revêtement au moins dans les zones fortement déformées par application forcée de ce revêtement contre au moins une partie d'une des empreintes et maintien de ce revêtement contre celle-ci;
c) introduction de la feuille support préchauffée entre les empreintes du moule ouvert;
d) fermeture du moule pour assurer l'association entre la feuille support et le revêtement décoratif préformé et le moulage définitif de l'article à produire.

En séparant les étapes de mise en forme du revêtement dans les zones fortement déformées et de formage et d'association de la feuille support et du revêtement décoratif, il a été, en effet, constaté que le revêtement conserve ses caractéristiques et, en particulier, son toucher dans les endroits fortement déformés de l'article produit.

Dans le procédé conforme à l'invention, la demanderesse préfère mettre en oeuvre des feuilles supports thermodéformables produites à partir de mélanges de polyoléfines et de particules ou de sciure de bois tels que décrits notamment dans le brevet Etats-Unis 4.228.116 mais il est bien évident que le procédé selon l'invention reste applicable pour d'autres types de feuilles supports.

Le revêtement décoratif mis en oeuvre peut également être quelconque mais le procédé selon l'invention se révèle particulièrement efficace lorsque ceux-ci sont des revêtements rembourrés tels que des simili-cuirs ou des textiles naturels ou synthétiques doublés d'une matière thermoplastique cellulaire (polypropylènes, polyuréthanes, etc.) ou encore des velours à poils épais.

Le préformage du revêtement décoratif peut être obtenu par tout moyen approprié. Ainsi, celui-ci peut être obtenu par un soufflage sur la face opposée à celle devant être appliquée contre au moins une partie d'une des empreintes ou par aspiration contre cette empreinte. Dans ces cas, il peut se révéler utile, lors de la mise en oeuvre de revêtements perméables, de rendre ceux-ci imperméables aux endroits à déformer, par exemple, par application d'un film imperméable adhésif sur la face du revêtement opposée à ladite empreinte.

Dans une forme de réalisation qui est préférée par la demanderesse, le préformage du revêtement décoratif peut être obtenu au moyen d'au moins un outil mobile logé dans l'autre empreinte du moule.

D'autres moyens sont encore utilisables tels que, par exemple, le recours à un robot approprié.

Le préformage du revêtement décoratif peut encore être obtenu par une fermeture temporaire du moule mais, dans ce cas, ce revêtement est déformé sur toute sa surface.

Le maintien en place des zones préformées du revêtement décoratif peut notamment être assuré par simple gravité, lorsque l'empreinte recevant les zones préformées est l'empreinte inférieure du moule, par aspiration au travers de l'empreinte sur laquelle il est appliqué ou par un ancrage mécanique provisoire quelconque (adhésif provisoire, crochets, tissus accrochant, etc.) prévu dans la partie de l'empreinte recevant la ou les parties préformées du revêtement décoratif.

Après préformage du revêtement décoratif, la feuille support, éventuellement préchauffée à une température appropriée, est introduite manuellement ou mécaniquement entre les matrices du moule et la mise en forme de cette feuille support et son association avec le revêtement décoratif peuvent alors être obtenus de façon classique par la fermeture du moule.

Le procédé conforme à l'invention se révèle particulièrement utile lors de la réalisation de garnitures internes de portières de véhicules automobiles mais il est bien évident qu'il est succeptible d'être avantageusement exploité pour la réalisation de tout article décoratif ou utilitaire présentant des zones fortement déformées.

L'invention concerne également un moule de thermoformage convenant particulièrement pour la réalisation du procédé qui vient d'être décrit, ce moule se caractérisant en ce qu'il comporte des matrices mâle et femelle équipées de moyens pour assurer le préformage au moins partiel du revêtement décoratif et son maintien, dans les zones déformées, sur au moins une partie d'une des matrices, avant l'introduction de la feuille support entre les matrices.

Afin de permettre la mise en oeuvre de la variante de procédé préférée par la demanderesse, les moyens pour préformer le revêtement décoratif sont, de préférence, constitués par au moins un outil mobile logé dans une des empreintes du moule.

Le procédé et le moule de thermoformage conformes à l'invention sont, en outre, illustrés plus en détail dans la description qui va suivre d'un mode de réalisation préféré par la demanderesse.

Dans cette description, on se réfèrera aux figures des dessins annexés dans lesquelles :
- la fig. 1 est une vue en coupe d'un moule de thermoformage ouvert montré dans la position d'introduction du revêtement décoratif;
- la fig. 2 est une vue en coupe du même moule montré en position de préformage du revêtement décoratif;
- la fig. 3 est une vue en coupe du même moule montré en position de maintien de la zone préformée du revêtement décoratif, ledit moule étant déjà garni de la feuille support.

Ainsi qu'il apparaît aux figures, le moule de thermoformage comporte une matrice femelle 1 dont l'empreinte 2 présente une zone 3 très rentrante appelée à conformer l'accoudoir d'une garniture interne de portière de véhicule automobile à produire et une matrice mâle 4 dont l'empreinte 5 correspond à celle de la matrice femelle. La partie de l'empreinte de la matrice mâle 4 correspondant à la zone 3 très rentrante de l'empreinte de la matrice femelle est constituée d'un outil mobile 6, logé dans la matrice 4, le déplacement de cet outil, dans le sens vertical, étant commandé par un vérin 7.

La zone 3 très rentrante de l'empreinte de la matrice femelle est, en outre, équipée de canaux d'aspiration 8 qui peuvent être mis en relation avec une source de vide appropriée non représentée.

Accessoirement, les matrices mâle et femelle peuvent être équipées de moyens 9 et 10 permettant un positionnement correcte de la ligne de séparation du revêtement décoratif dans le cas de la mise en oeuvre d'un tel revêtement constitué de deux matériaux différents préassociés ou présentant deux aspects de surface différents.

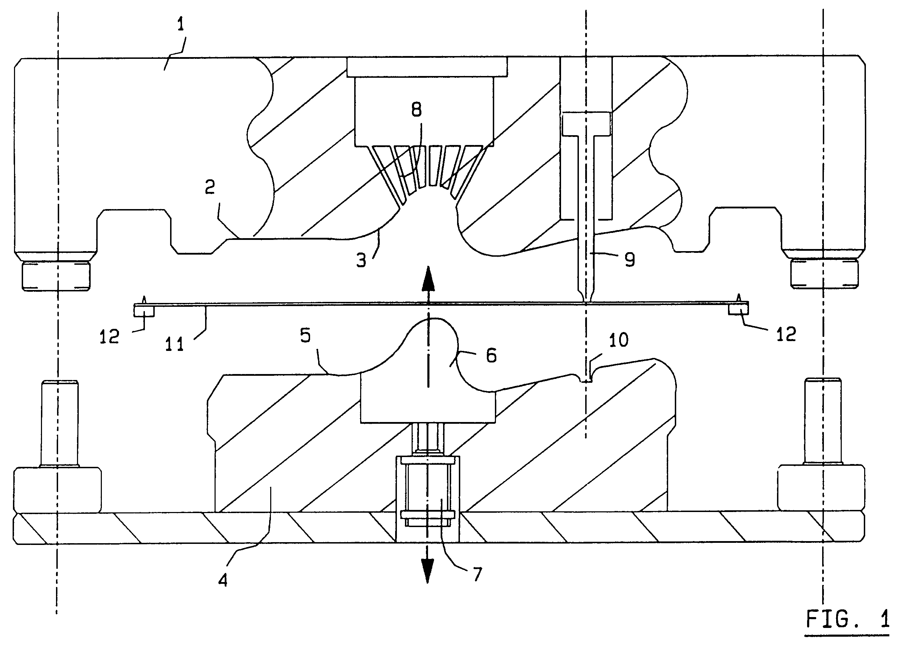

Dans la position montrée à la fig. 1, le moule ouvert est seulement garni du revêtement décoratif 11 maintenu tendu au moyen d'un cadre 12 approprié.

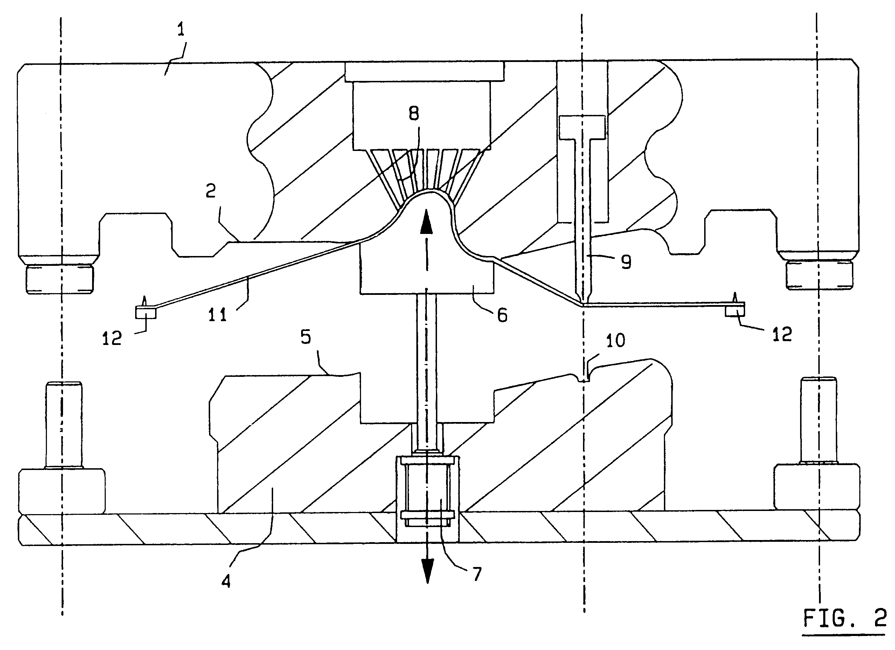

Dans la position montrée à la fig. 2, le revêtement décoratif 11, conformément à l'invention, est tout d'abord préformé dans la zone 3 très rentrante par un déplacement provisoire et contrôlé de l'outil mobile 6 via son vérin 7 de commande.

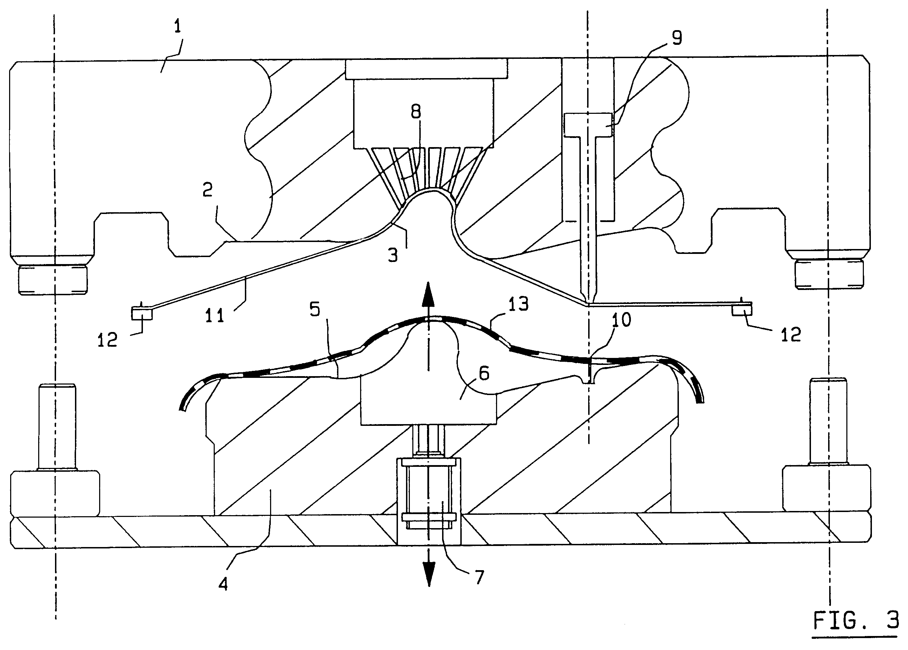

Dans la position montrée à la fig. 3, l'outil 6 est ramené dans sa position initiale par l'intermédiaire du vérin 7 tandis que la partie préformée du revêtement décoratif 11 est maintenue en place dans la zone 3 très rentrante de la matrice femelle du fait que les canaux d'aspiration 8 sont mis en relation avec la source de vide.

Dans cette position, le moule de thermoformage peut alors être garni de la feuille support 13 préchauffée et déposée mécaniquement, par exemple, par l'intermédiaire d'un tapis roulant non représenté.

Dans la position montrée à la fig. 3, il suffit encore de fermer le moule par rapprochement des matrices mâle et femelle pour conformer la garniture interne de portière désirée par formage complet de la feuille support 13 et du revêtement décoratif 11 et association entre ces éléments.

## Revendications

1. Procédé pour mouler un article présentant au moins une zone fortement déformée et constitué d'une feuille support rigide thermodéformée et d'un revêtement décoratif souple associés caractérisé en ce qu'il comprend les étapes successives suivantes :
a) introduction du revêtement tendu entre les matrices mâle et femelle d'un moule de thermoformage sous pression ouvert dont les empreintes reproduisent la forme de l'article à produire;
b) préformage du revêtement au moins dans les zones fortement déformées par application forcée contre au moins une partie d'une des empreintes et maintien de ce revêtement contre celle-ci;
c) introduction de la feuille support préchauffée entre les empreintes du moule ouvert;
d) fermeture du moule pour assurer l'association entre la feuille support et le revêtement décoratif préformé et le moulage définitif de l'article à produire.

2. Procédé selon la revendication 1 caractérisé en ce que le préformage du revêtement est assuré par soufflage.

3. Procédé selon la revendication 1 caractérisé en ce que le préformage du revêtement est assuré par aspiration.

4. Procédé selon la revendication 1 caractérisé en ce que le préformage du revêtement est assuré par une fermeture temporaire du moule.

5. Procédé selon la revendication 1 caractérisé en ce que le préformage du revêtement est assuré au moyen d'au moins un outil mobile logé dans l'autre empreinte du moule.

6. Procédé selon la revendication 1 caractérisé en ce que le préformage du revêtement est assuré au moyen d'un robot approprié.

7. Procédé selon la revendication 1 caractérisé en ce que le maintien du revêtement est assuré par aspiration, par gravité ou par ancrage mécanique provisoire.

8. Moule de thermoformage sous pression pour la réalisation du procédé selon l'une quelconque des revendications 1 à 7 caractérisé en ce qu'il comporte des matrices mâle et femelle équipées de moyens pour assurer le préformage au moins partiel du revêtement décoratif et son maintien dans les zones fortement déformées, sur au moins une partie de l'empreinte d'une des matrices, avant l'introduction de la feuille support entre les matrices.

9. Moule de thermoformage selon la revendication 8 caractérisé en ce que les moyens pour préformer le revêtement décoratif sont constitués par au moins un outil mobile logé dans une des empreintes du moule.
